Europäisches Patentamt

European Patent Office

Office européen des brevets

(11) Numéro de publication : **0 125 987**
**B1**

(12) FASCICULE DE BREVET EUROPÉEN

(45) Date de publication du fascicule du brevet :
12.11.86

(21) Numéro de dépôt : 84400929.0

(22) Date de dépôt : 07.05.84

(51) Int. Cl.⁴ : **B 60 V   1/00**

(54) **Véhicule à coussin d'air.**

(30) Priorité : 09.05.83 FR 8307722
24.08.83 FR 8313679

(43) Date de publication de la demande :
21.11.84 Bulletin 84/47

(45) Mention de la délivrance du brevet :
12.11.86 Bulletin 86/46

(84) Etats contractants désignés :
**DE GB IT**

(56) Documents cités :
**US-A- 3 662 852**
**US-A- 4 196 686**

(73) Titulaire : **Chaneac, Henri Gaston**
**Le Vieux Chateau 2 place Boileau**
**F-91560 Crosne (FR)**

(72) Inventeur : **Chaneac, Henri Gaston**
**Le Vieux Chateau 2 place Boileau**
**F-91560 Crosne (FR)**

(74) Mandataire : **Cabinet BERT, DE KERAVENANT & HER-**
**RBURGER**
**115, Boulevard Haussmann**
**F-75008 Paris (FR)**

## Description

L'invention concerne un véhicule à coussin d'air comportant une zone de coussin d'air délimitée par la plate-forme, les jupes périphériques et la surface du sol en regard, la plate-forme constituant un important réservoir d'air sous pression entre la face supérieure, la face inférieure et les côtés verticaux de cette plate-forme, ce réservoir étanche, alimenté par un ou plusieurs compresseurs, étant pourvu de conduits, (US-A-4 196 686), ce véhicule étant caractérisé en ce que ces conduits sont tous munis de vannes réglables dont les ouvertures sont commandées par le conducteur du véhicule ou par un système automatique, ces conduits assurant à la fois la sustentation, le déplacement, le freinage et la direction du véhicule en outre équipé de moyens de régulation de pression permettant au conducteur de régler la pression dans le réservoir pour des valeurs prédéterminées en commandant la variation de la vitesse de rotation du compresseur.

Suivant une autre caractéristique de l'invention, le réservoir alimente par des conduits, les compartiments séparés par des jupes internes et constituant la zone de coussin d'air, chaque conduit étant équipé à la fois par un manodétendeur et par une vanne, tous deux étant réglables par le conducteur du véhicule ou par un système automatique.

Suivant une autre caractéristique de l'invention, le réservoir alimente en air sous pression, des conduits munis de vannes dont l'ouverture est commandée par le conducteur du véhicule ou par un système automatique, ces conduits prévus sur les côtés de la plate-forme assurant l'orientation du véhicule, son déplacement ou son freinage.

Suivant une autre caractéristique de l'invention, le réservoir alimente en air sous pression, par des conduits munis de vannes commandées par le conducteur du véhicule ou par un système automatique, des jupes gonflables soit étanches soit comportant une fente longitudinale à la partie inférieure des jupes.

Suivant une autre caractéristique de l'invention, le réservoir alimente en air sous pression par des conduits les vannes de sustentation commandées par le conducteur du véhicule ou par un système automatique, les vannes de sustentation réalisant une fente grâce à leurs deux bords plans rectilignes situés à la périphérie du véhicule et à la séparation des compartiments du coussin d'air, mobiles en rotation créant ainsi un rideau d'air à haute pression s'échappant par la fente, et emprisonnant l'air de sustentation du coussin d'air.

Suivant une autre caractéristique de l'invention, le compresseur d'air est une turbo-machine logée à l'intérieur du réservoir comportant dans ce cas une ou plusieurs entrées munies d'une ou plusieurs soufflantes ou turbines entraînées par la turbo-machine, et alimentant en air sous pression le réservoir.

L'invention est représentée à titre d'exemple non limitatif sur les dessins ci-joints dans lesquels :

la figure 1 est une vue en perspective schématique d'un premier mode de réalisation de l'invention,

la figure 2 est une vue de dessus d'un autre mode de réalisation du véhicule conforme à l'invention,

les figures 3 et 4 sont des vues de-dessous de deux modes de réalisation du véhicule de la figure 1,

les figures 5 et 6 représentent en coupe deux modes de réalisation de l'alimentation des jupes,

les figures 7 et 8 sont des vues en coupe partielle du réservoir d'air sous pression alimentant un autre mode de sustentation par la création d'un rideau d'air emprisonnant l'air de sustentation,

les figures 9 et 10 sont des vues en coupe horizontale d'une réalisation d'un véhicule à coussin d'air dans le cas où le compresseur d'air est une turbo-machine qui alimente le réservoir d'air sous pression, soit directement (figure 9), soit par l'intermédiaire d'un conduit (figure 10).

La présente invention a pour but la réalisation d'un véhicule à coussin d'air qui est très stable en mouvement ou à l'arrêt, quelle que soit la répartition de la charge qu'il supporte. En outre, ce véhicule est, en fonctionnement, très facile à diriger et permet d'augmenter la durée de vie des jupes délimitant les compartiments de la zone de coussin d'air.

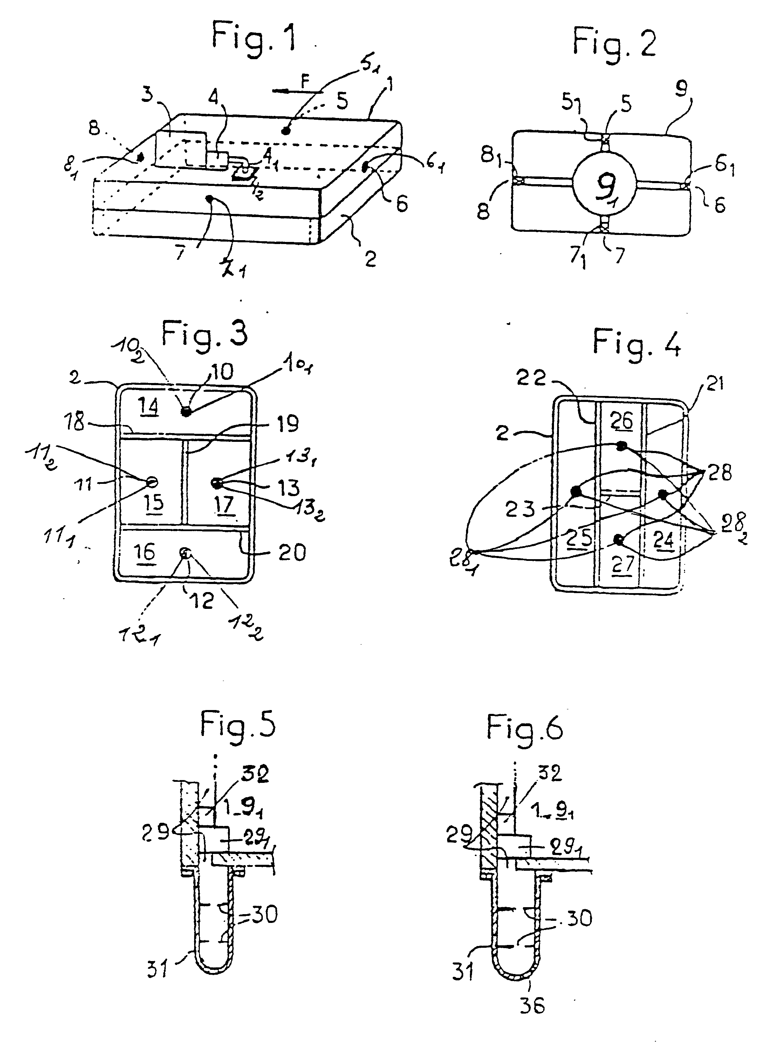

Le véhicule représenté sur la figure 1 se compose d'une plate-forme 1 destinée à supporter les charges à transporter, la périphérie de la face inférieure de cette plate-forme étant pourvue d'une jupe 2 qui délimite entre cette plate-forme et le sol, la zone de coussin d'air assurant la sustentation du véhicule.

Conformément à l'invention, la plate-forme 1 est réalisée creuse et forme ainsi un réservoir qui est alimenté en air sous pression par un conduit $4_1$ branché à la sortie d'un groupe moteur thermique 3 et compresseur 4. Des moyens $4_2$ de régulation permettent au conducteur de régler la pression d'air dans le réservoir pour des valeurs prédéterminées en commandant la variation de la vitesse de rotation du compresseur.

L'air sous pression contenu dans la plate-forme du réservoir 1 est destiné à assurer la sustentation du véhicule, son orientation, son déplacement et son freinage ainsi que l'alimentation en air des jupes ou des vannes de sustentation.

Afin d'assurer l'orientation, le déplacement et le freinage du véhicule, le réservoir 1 qui est de forme générale parallélépipédique comporte sur chacune de ses parois latérales au moins une buse 5, 6, 7 et 8 de projection d'air. Ainsi en supposant que le véhicule est destiné à se déplacer dans le sens de la flèche F, l'air sortant de la buse 6 est destiné à assurer le déplacement du véhicule vers l'avant, par réaction, alors que la buse 8 est destinée à son freinage et les buses 5 et 7 sont destinées à son déplacement latéral ou à son orientation en combinaison avec les buses 6 et 8.

Des volets ou déflecteurs pourront être prévus à l'extérieur de ce réservoir 1 et en regard de ces buses afin de permettre l'orientation des jets d'air et de concourir à la direction du véhicule.

Ces buses 5, 6, 7 et 8 sont également pourvues de vannes réglables $5_1$, $6_1$, $7_1$, $8_1$ indépendamment les unes des autres, afin de permettre le réglage de la puissance de déplacement, d'orientation ou de freinage. Une commande centrale pouvant être actionnée par des pédales et un volant, permettra de déterminer l'ouverture et la fermeture de ces vannes, ainsi que toute position intermédiaire désirée.

Dans l'exemple de réalisation de la figure 1, le réservoir 1 occupe toute la surface de la plate-forme, mais dans d'autre cas le réservoir $9_1$ (voir figure 2) occupera une partie de la plate-forme 9, et, dans ce cas les buses 5, 6, 7 et 8 pourvues de leurs vannes de réglage $5_1$, $6_1$, $7_1$ et $8_1$ débouchent à la périphérie de la plate-forme 9 et sont reliées au réservoir $9_1$ par des conduits correspondants.

Le réservoir 1 ou $9_1$ est de préférence réalisé en éléments alvéolés ou en compartiments, afin de résister sans déformation à la pression interne importante de l'air.

Afin d'assurer la sustentation du véhicule, le réservoir 1, $9_1$ comporte sur sa face inférieure des orifices d'écoulement d'air 10, 11, 12 et 13 qui sont chacun pourvu d'abord d'un mano-détendeur $10_1$, $11_1$, $12_1$, $13_1$ et ensuite d'une vanne réglable du débit d'air $10_2$, $11_2$, $12_2$, $13_2$ commandés indépendamment et permettant si désiré l'arrêt du débit d'air. Ces orifices débouchent dans la zone de coussin d'air délimitée par la jupe périphérique afin de créer dans cette zone une pression d'air suffisante pour assurer la sustentation du véhicule.

De préférence cette zone de coussin d'air est divisée en plusieurs compartiments 14, 15, 16 et 17 par des jupes internes 18, 19 et 20 de façon que par la commande manuelle ou automatique de l'ouverture et de la fermeture des manodétendeurs $10_1$, $11_1$, $12_1$, $13_1$ et des vannes $10_2$, $11_2$, $12_2$, $13_2$ de ces orifices, il soit possible de prendre en compte la charge du véhicule, sa vitesse, l'assiette de la plate-forme compte tenu de la répartition de la charge etc.

Ainsi suivant cette construction, chaque compartiment du coussin d'air est alimenté par l'air sous pression issu du réservoir, a une pression réglable par le mano-détendeur et avec un débit réglable par l'ouverture de la vanne de ce compartiment. Dans certains cas, on pourra supprimer le mano-détendeur sans pour cela sortir du cadre de l'invention, la vanne d'arrivée d'air sous pression permettant un réglage suffisant de la pression d'air du compartiment du coussin d'air. Le compartimentage de la zone de coussin d'air sera effectué en fonction des dimensions de la plate-forme et également en fonction de ses superstructures. Suivant la figure 4, les jupes internes 21, 22 et 23 délimitent avec la jupe périphérique 2, deux compartiments longitudinaux 24 et 25 et deux compartiments 26 et 27 adjacents des extrémités avant et arrière du véhicule. Bien entendu, dans ce cas, chacun des compartiments comporte au moins un orifice d'écoulement d'air 28 par lequel il communique directement avec le réservoir par l'intermédiaire des mano-détendeurs $28_1$, et des vannes $28_2$.

La jupe périphérique 2 et les jupes internes 18, 19, 20 ou 21, 22, 23 sont constituées par une enveloppe souple 31 à bords sensiblement parallèles (voir figures 5 et 6) ou à bords inclinés en V, l'extrémité inférieure de ces jupes étant arrondie afin de ne pas se déchirer sur les aspérités du sol. Ces jupes étanches sont alimentées en air sous pression à partir du réservoir et cela indépendamment de la sustentation du véhicule assurée par les compartiments délimités par les jupes.

Ces jupes sont fixées à la partie inférieure de la plate-forme et communiquent avec le réservoir 1, $9_1$ par un conduit 29 muni d'un mano-détendeur 32 et d'une vanne $29_1$.

De préférence l'enveloppe 31 constituant les jupes comportera des cloisonnements verticaux étanches formant des éléments distincts de façon qu'en cas de détérioration de l'un d'entre eux, un premier clapet puisse fermer l'arrivée d'air 29 correspondante du réservoir, pour qu'il ne se vide pas et un second clapet puisse fermer l'arrivée d'air 29 en cas de panne de compresseur sur la mer afin que l'eau ne puisse entrer dans le réservoir, le véhicule flottant en attendant d'être dépanné.

Des cloisons ajourées 30 horizontales et/ou verticales seront prévues entre les bords latéraux des jupes afin de maintenir leur forme lorsqu'elles sont mises en pression.

Bien entendu, le mano-détendeur 32 pourra être supprimé, sans sortir pour cela du cadre de l'invention. On pourra aussi munir ces jupes d'une fente longitudinale 36 à la partie inférieure (figure 6) grâce à un laçage maintenant l'écartement des bords de la fente pour obtenir un rideau d'air à très forte pression qui emprisonnera l'air du coussin d'air à faible pression, ce qui aura pour effet de soulever le véhicule et de protéger ainsi les jupes du contact avec le sol.

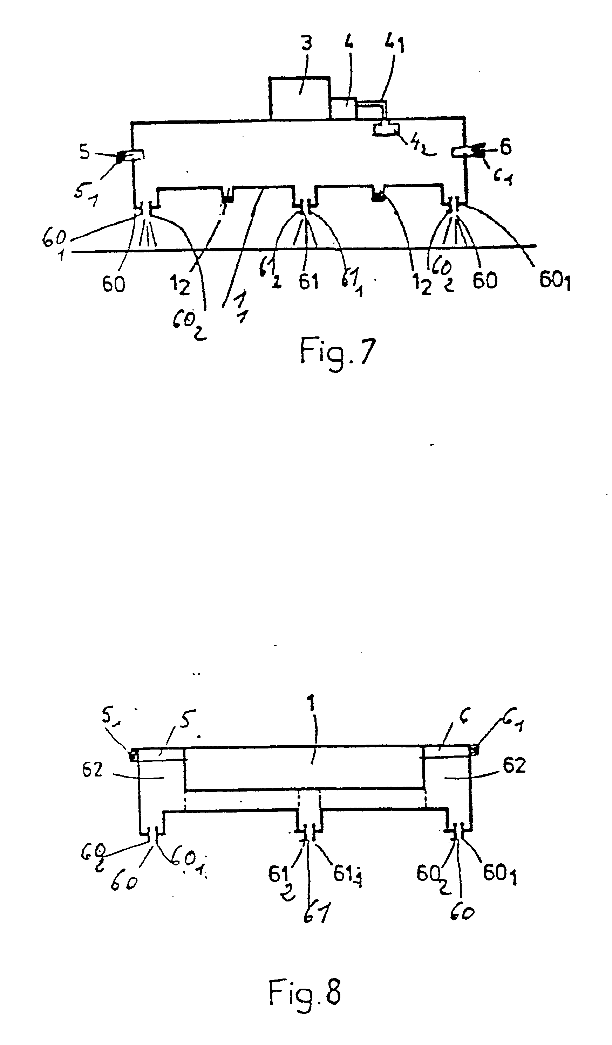

La figure 7 est un autre mode de réalisation d'un véhicule à coussin d'air, dont les jupes 31 sont remplacées par un rideau d'air s'échappant de vannes de sustentation 60 réglables par le conducteur du véhicule dont les deux bords $60_1$ et $60_2$ peuvent être plats; droits à axes parallèles, mobiles en rotation autour de leurs axes de fixation. Ces bords sont montés de façon étanche à la partie inférieure de la plate-forme afin de pouvoir régler leur écartement et leur inclinaison pour obtenir un rideau d'air plus ou moins épais et dont la direction peut être réglée par le conducteur du véhicule. Ces vannes de sustentation sont disposées à la périphérie du véhicule et sur les limites des compartiments constituant la zone de coussin d'air, leur nombre étant fonction de la dimension du véhicule.

Dans le cas des figures 6 et 7, le débit d'air fourni par la fente des jupes ou par les vannes de sustentation étant très important, on pourra supprimer les conduits d'arrivée d'air sous pression dans les compartiments de la zone de coussin d'air sans pour cela sortir du cadre de l'invention.

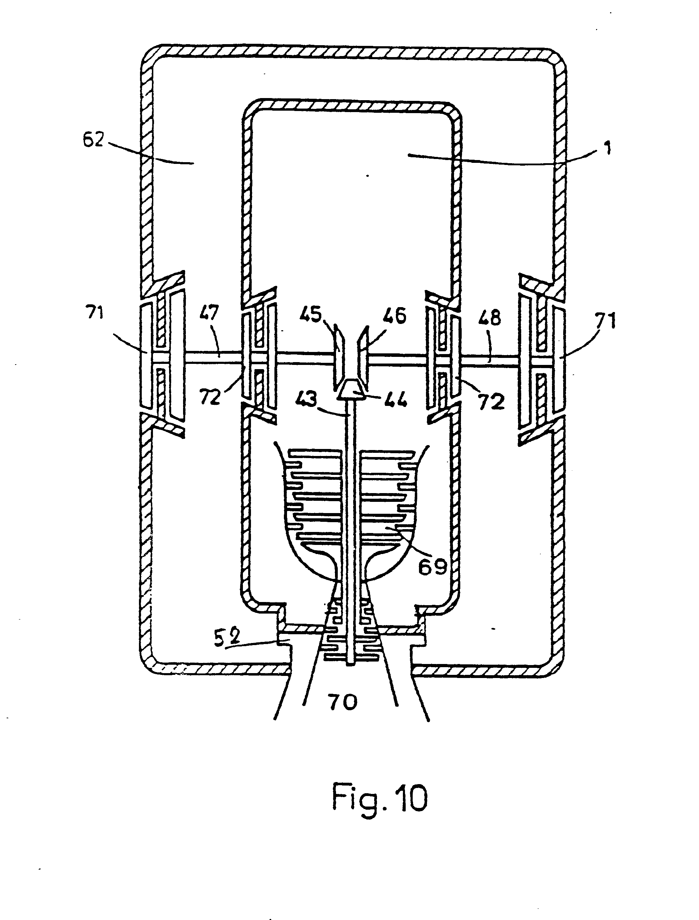

La figure 8 diffère de la précédente en ce que le compresseur d'air alimente un conduit important 62 qui entoure le réservoir 1 dont la fonction essentielle sera d'assurer la direction et le déplacement du véhicule. On retrouve les mêmes éléments que ceux de la figure 6, on verra dans le cas de la figure 10, les raisons de ce montage.

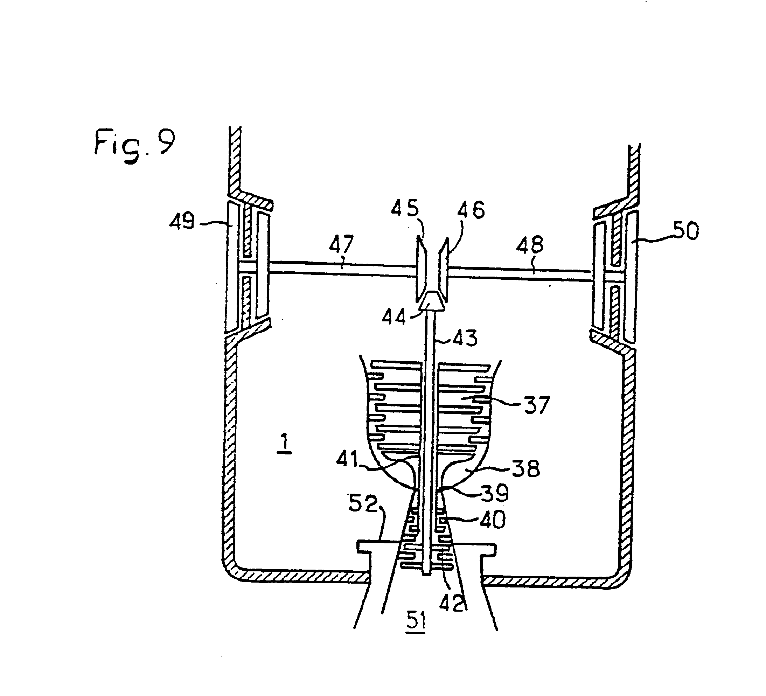

La figure 9 est un exemple de réalisation d'un véhicule à coussin d'air dont le moteur 3 et le compresseur 4 sont une turbo-machine, placée à l'intérieur de réservoir 1. Le remplissage du réservoir est assuré par la combinaison d'un turbo-moteur qui permet d'obtenir une puissance importante sur un arbre et par un turbo-réacteur qui permet de disposer d'une poussée importante pour un poids embarqué très faible. Cet ensemble turbo-moteur-réacteur est inclus à l'intérieur du réservoir et comprend un compresseur haute pression comportant, par exemple, cinq turbines haute pression permettant d'obtenir une pression d'air aussi élevée que possible, une chambre de combustion 38 alimentée d'une part en carburant, d'autre part en air sous-pression issu du compresseur 37 de façon que la combustion du carburant permette d'augmenter la température des gaz et donc leur vitesse et leur volume. Les gaz issus de cette chambre de combustion 38 entraînent, par l'intermédiaire d'un ajutage 39, deux turbines motrices 40 qui sont reliées par un arbre creux 41 aux turbines du compresseur 37 afin de les entraîner en rotation.

Après avoir traversé les turbines motrices 40, les gaz issus de la chambre de combustion 38 entraînent deux turbines de puissance 42 montées sur un arbre 43 disposé coaxialement à l'arbre creux 41. Cet arbre 43 comporte, à l'intérieur du réservoir 1, un pignon conique 44 qui engrène avec deux couronnes 45, 46 reliées par des axes 47, 48 respectivement à deux ou plusieurs soufflantes 49 et 50 ou à des turbines centrifuges destinées à la mise en pression du réservoir 1 ou à une combinaison de soufflantes et de turbines.

Le compresseur 37, la chambre de combustion 38, l'ajutage 39, la turbine motrice 40 et la turbine de puissance 42 sont disposés coaxialement autour de l'arbre 43, les turbines 42 débouchent à l'extérieur du réservoir par une tuyère 51. Une vanne 52 est en outre disposée au travers de la paroi du réservoir 1 autour de la turbine de puissance 42 et de la tuyère 51.

Le fonctionnement de cet ensemble est le suivant. Dans sa partie de turbo-moteur, l'air du réservoir 1 est comprimé par les turbines du compresseur 37 afin d'alimenter la chambre de combustion 38 et des gaz chauds à très forte pression qui en sont issus entraînent en rotation les turbines 40 et 42 qui entraînent elles-mêmes respectivement le compresseur 37 et les soufflantes 49 et 50. Les gaz d'échappement de cet ensemble turbo-moteur s'échappent alors par la tuyère 51 et constituent le flux primaire du turbo-réacteur dont le flux secondaire provient directement du réservoir 1 par l'intermédiaire de la vanne réglable 52. Cette disposition du turbo-réacteur à la sortie d'air du réservoir aura pour effet de diluer les gaz brûlés, d'abaisser leur température, de diminuer le bruit produit par les turbines et d'augmenter le rendement. Il est bien évident que la vanne 52 est la même que la vanne 6 de la figure 1.

Les turbines des compresseurs 37, 49 et 50 pourront, si désiré, être constituées par des turbines centrifuges, tandis que leur nombre sera déterminé en fonction de la pression désirée. Par ailleurs, le rapport de transmission établi par le pignon 44 conique et les couronnes 45 et 46 sera déterminé afin d'obtenir une démultiplication convenable entre la vitesse de rotation de la turbine 42 et celles des soufflantes 49, 50 qui sont de grandes dimensions.

La figure 10 est un autre exemple de réalisation d'un véhicule à coussin d'air, dont le moteur 3 et le compresseur d'air 4 sont une turbo-machine dans le cas où le réservoir 1 est entouré du conduit 62. La turbo-machine 69 et son échappement 70 sont conformes à la description précédente. L'arbre 43 du turbo-moteur est relié par des pignons coniques 44, 45 et 46 et deux ensembles de turbines. Chaque ensemble de turbines se compose de deux turbines 71 et 72 solidaires du même axe 47 ou 48 et entraînées à partir du turbo-moteur. Les turbines 71 sont disposées pour comprimer l'air extérieur dans le conduit 62 alors que les turbines 72 sont prévues pour comprimer l'air prélevé du conduit 62 dans le réservoir 1. On obtient ainsi les différences de pression nécessaires au fonctionnement correct du véhicule. On n'a pas représenté sur cette figure les conduits et leurs vannes qui assurent la direction et la suspension du véhicule. Dans ce cas, l'air sous pression dans le conduit 62 assure la sustentation du véhicule, et l'air sous pression dans le réservoir 1 assure la direction du véhicule.

## Revendications

1. Véhicule à coussin d'air comportant une zone de coussin d'air délimité par la plate-forme (1), les jupes périphériques (2) et la surface du sol en regard, tout ou partie de la plate-forme constituant un important réservoir d'air sous pression entre la face supérieure, la face inférieure et les côtés verticaux de cette plate-forme, ce réservoir étanche, alimenté par un ou plusieurs compresseurs (4), étant pourvus de conduits (5, 6, 7, 8, 10, 11, 12, 13), ce véhicule étant caractérisé en ce que ces conduits sont tous munis de vannes réglables $(5_1, 6_1, 7_1, 8_1, 10_2, 11_2, 12_2, 13_2)$ dont les ouvertures sont commandées par le conducteur du véhicule ou par un système automatique, ces conduits assurant à la fois la sustentation, le déplacement, le freinage et la direction du véhicule équipé en outre de moyens de régulation de pression permettant au conducteur de régler indépendamment la pression dans le réservoir pour des valeurs prédéterminées en commandant la variation de la vitesse de rotation du compresseur.

2. Véhicule conforme à la revendication 1, caractérisé en ce que le réservoir (1) alimente en air sous pression par des conduits (10, 11, 12, 13, 28), les compartiments (14, 15, 16, 17) (24, 25, 26, 27) séparés par des jupes internes (18, 19, 20) (21, 22, 23) constituant la zone de coussin d'air, chaque conduit étant équipé d'un manodétendeur et d'une vanne tous deux réglables indépendamment par le conducteur du véhicule ou par un système automatique afin de pouvoir faire varier la pression et le débit de l'air dans chaque compartiment pour prendre en compte les variations de charge, la vitesse et l'assiette du véhicule.

3. Véhicule conforme aux revendications 1 et 2, caractérisé en ce que le réservoir (1) alimente en air sous pression des conduits (5, 6, 7, 8) munis chacun d'une vanne ($5_1$, $6_1$, $7_1$, $8_1$) dont l'ouverture est commandée par le conducteur du véhicule ou par un système automatique, ces conduits débouchant sur les côtés verticaux de la plate-forme et assurant l'orientation du véhicule, son déplacement ou son freinage.

4. Véhicule conforme aux revendications 1, 2, 3, caractérisé en ce que le réservoir 1 alimente en air sous pression les jupes étanches gonflables (31) au moyen de conduits (29) munis de vannes ($29_1$) dont l'ouverture est commandée par le conducteur du véhicule ou par un système automatique, ces conduits pouvant ou non être équipés d'un manodétendeur (32) afin de régler la pression de l'air à l'intérieur des jupes.

5. Véhicule conforme aux revendications 1, 2, 3, caractérisé en ce que le réservoir (1) alimente en air sous pression des jupes gonflables (31) comportant à leur partie inférieure une fente longitudinale par des conduits (29) munis de leur vanne ($29_1$) dont l'ouverture est commandée par le conducteur du véhicule ou par un système automatique, cette fente créant un rideau d'air à très haute pression qui emprisonne l'air de sustentation à plus faible pression, et soulève le véhicule pour protéger les jupes des aspérités du sol.

6. Véhicule conforme à l'une quelconque des revendications précédentes, caractérisé en ce que le réservoir (1) alimente en air sous pression des vannes de sustentation (60 et 61) réglables, situées à la périphérie du véhicule et à la limite de chaque compartiment du coussin d'air de façon à créer un rideau d'air à haute pression emprisonnant l'air de sustentation à plus faible pression, ces vannes étant constituées par deux bords plans rectilignes ($60_1$ et $60_2$ ; $61_1$ et $61_2$) mobiles en rotation de façon indépendante, autour d'axes parallèles, liés au réservoir d'une façon étanche afin de pouvoir faire varier leurs écartements et leurs inclinaisons, permettant ainsi au conducteur du véhicule ou à un système automatique de régler l'ouverture, l'inclinaison et l'épaisseur du rideau d'air selon l'utilisation du véhicule.

7. Véhicule conforme à l'une quelconque des revendications précédentes, caractérisé en ce que le moteur et le compresseur sont une turbo-machine logée à l'intérieur du réservoir.

8. Véhicule conforme à l'une quelconque des revendications précédentes, caractérisé en ce que la turbo-machine entraîne par l'intermédiaire de pignons, des soufflantes et/ou des turbines alimentant en air sous pression, le réservoir (1).

9. Véhicule conforme à l'une quelconque des revendications précédentes, caractérisé en ce que les gaz de combustion de la turbo-machine débouchent par une tuyère d'échappement à l'extérieur du réservoir et à l'arrière du véhicule, un passage annulaire muni d'une vanne de réglage (52) par le conducteur du véhicule ou par un système automatique, étant aménagé entre la paroi verticale du réservoir et la tuyère d'échappement de la turbo-machine, afin de permettre à l'air sous pression du réservoir et la tuyère d'échappement de la turbo-machine, afin de permettre à l'air sous pression du réservoir de s'échapper, lorsque la vanne est ouverte, en entourant la tuyère des gaz d'échappement de la turbo-machine.

10. Véhicule conforme aux revendications 7, 8, 9, caractérisé en ce qu'un conduit (62) de grande dimension entoure le réservoir (1), la turbo-machine entraînant, d'une part des soufflantes et/ou des turbines alimentant en air sous pression le conduit (62) et d'autre part des soufflantes et/ou des turbines prélevant l'air dans le conduit alimentant en air sous pression le réservoir (1) afin d'obtenir une différence de pression entre le conduit (62) et le réservoir (1) de façon à faciliter les mouvements du véhicule, le conduit (62) alimentant les vannes de sustentation et le réservoir (1) alimentant les vannes de direction.

**Claims**

1. An air-cushion vehicle comprising an air cushion area defined by the platform (1), the peripheral skirts (2) and the facing ground surface, the whole or part of the platform constituting a substantial reservoir of pressurised air between the upper face, the lower face and the vertical sides of said platform, said sealtight reservoir, supplied by one or more compressors (4) being provided with ducts, (5, 6, 7, 8, 10, 11, 12, 13), said vehicle being characterised in that said ducts are all fitted with valves ($5_1$, $6_1$, $7_1$, $8_1$, $10_2$, $11_2$, $12_2$, $13_2$) the openings of which are controlled by the driver of the vehicle or by an automatic system, said ducts ensuring at the same time the lift, the movement, the braking and the direction of the vehicle provided in addition by pressure regulation means enabling the driver to control independently the pressure in the reservoir for predetermined values, by controlling the variation and the speed of rotation of the compressor.

2. A vehicle in accordance with claim 1, characterised in that the reservoir (1) supplies with pressurised air along ducts (10, 11, 12, 13, 28) the compartments (14, 15, 16, 17) (24, 25, 26, 27) separated by internal skirts (18, 19, 20) (21, 22, 23) constituting the air cushion area, each duct being fitted with a manual reducing valve and a valve, both independently controllable by the driver of the vehicle or by an automatic system so as to be able to vary the pressure and flow of air in each compartment to take into account load variations, speed and trim of the vehicle.

3. A vehicle in accordance with claims 1 and 2, characterised in that the reservoir (1) supplies with pressurised air ducts (5, 6, 7, 8) each fitted with a valve ($5_1$, $6_1$, $7_1$, $8_1$) the opening of which is controlled by the driver of the vehicle or by an automatic system, said ducts opening out onto the vertical sides of the platform and ensuring the trim, the movement and the braking of the vehicle.

4. A vehicle according to claims 1, 2, 3, characterised in that the reservoir (1) supplies with pressurised air the inflatable seal-tight skirts (31) by means of ducts (29) fitted with valves ($29_1$) the opening of which is controlled by the driver of the vehicle or by an automatic system, said ducts being optionally fitted by a manual reducing valve (32) so as to regulate air pressure inside the skirts.

5. A vehicle in accordance with claims 1, 2, 3 characterised in that the reservoir (1) supplies with pressurised air inflatable skirts (31) having at their bottom part a longitudinal slit along ducts (29) fitted with their valve ($29_1$) the opening of which is controlled by the driver of the vehicle or by an automatic system, said slit creating a curtain of very highly pressurised air which confines the lifting air at a lower pressure, and lifts the vehicle to protect the skirts from the irregularities of the ground.

6. A vehicle in accordance with any one of the foregoing claims, characterised in that the reservoir (1) supplies with pressurised air adjustable lift valves (60 and 61) situated on the periphery of the vehicle and at the limit of each compartment of the air cushion so as to create a curtain of highly pressurised air confining the lifting air at a lower pressure, said valves being constituted by two flat rectilinear flaps ($60_1$ and $60_2$; $61_1$ and $61_2$) mobile in rotation independently, about parallel axes, connected to the reservoir in seal-tight manner so as to be able to vary their distances and slants, thus enabling the driver of the vehicle or an automatic system to control the opening, the slant and the thickness of the air cushion depending on the use made of the vehicle.

7. A vehicle according to any one of the foregoing claims, characterised in that the engine and the compressor are a turbo-engine housed inside the reservoir.

8. A vehicle according to any one of the foregoing claims, characterised in that the turbo-engine drives through gearing blowers and/or turbines supplying the reservoir (1) with pressurised air.

9. A vehicle in accordance with any one of the foregoing claims, characterised in that the combustion gases of the turbo-engine come out, through an exhaust pipe, outside the reservoir and at the rear of the vehicle, an annular passage fitted with control valve (52) controlled by the driver of the vehicle or by an automatic system, being provided between the vertical wall of the reservoir and the exhaust pipe of the turbo-engine, so as to enable the pressurised air in the reservoir to flow out when the valve is open, and surrounding the pipe for the exhaust gases of the turbo-engine.

10. A vehicle according to claims 7, 8, 9, characterised in that a large size duct (62) surrounds the reservoir (1), the turbo-engine driving on the one hand blowers and/or turbines supplying with pressurised air the duct (62), and on the other hand blowers and/or turbines taking air from the duct supplying the reservoir (1) with pressurised air so as to achieve a difference of pressure between the duct (62) and the reservoir (1) so as to facilitate the movements of the vehicle, the duct (62) supplying the lifting valves and the reservoir (1) supplying the steering valves.

## Patentansprüche

1. Luftkissenfahrzeug, bestehend aus einer von der Plattform (1), den Umfangswänden (2) und der Gegenfläche des Bodens begrenzten Luftkissenzone, wobei die Plattform ganz oder teilweise einen erheblichen Druckluftspeicher zwischen der oberen Fläche, der unteren Fläche und den senkrechten Seiten der Plattform bildet und der von einem oder mehreren Kompressoren (4) gespeiste dichte Speicher mit Leitungen (5, 6, 7, 8, 10, 11, 12, 13) versehen ist, dadurch gekennzeichnet, daß die Leitungen sämtlich mit Regulierventilen ($5_1$, $6_1$, $7_1$, $8_1$, $10_2$, $11_2$, $12_2$, $13_2$) versehen sind, deren Öffnungen vom Fahrzeugführer oder von einem automatischen System gesteuert sind, und die Leitungen zugleich den Auftrieb, die Verlagerung, die Bremsung und die Richtung des Fahrzeugs bestimmen, das außerdem mit Druckreguliermitteln versehen ist, die es dem Fahrzeugführer ermöglichen, den Druck im Speicher auf vorbestimmte Werte durch Veränderung der Drehzahl des Kompressors unabhängig zu regulieren.

2. Fahrzeug nach Anspruch 1, dadurch gekennzeichnet, daß der Speicher (1) über Leitungen (10, 11, 12, 13, 28) die durch Innenwände (18, 19, 20) (21, 22, 23) unterteilte, die Luftkissenzone bildende Abteile (14, 15, 16, 17) (24, 25, 26, 27) mit Druckluft versorgt und jede Leitung mit einem Druckminderer und einem Ventil versehen ist, die beide unabhängig vom Fahrzeugführer oder durch ein automatisches System regulierbar sind, um den Luftdruck und -durchsatz in jedem Abteil zur Berücksichtigung von Veränderungen der Last, der Geschwindigkeit und der Lage des Fahrzeugs verändern zu können.

3. Fahrzeug nach den Ansprüchen 1 und 2, dadurch gekennzeichnet, daß der Speicher (1) Leitungen (5, 6, 7, 8) mit Druckluft versorgt, die jeweils mit einem Ventil ($5_1$, $6_1$, $7_1$, $8_1$) versehen sind, deren Öffnung vom Fahrzeugführer oder durch ein automatisches System gesteuert ist, und daß diese Leitungen auf den senkrechten Seiten der Plattform ausmünden und den Fahrzeugkurs sowie dessen Verlagerung oder Bremsung bestimmen.

4. Fahrzeug nach den Ansprüchen 1, 2 und 3, dadurch gekennzeichnet, daß der Speicher (1) dichte aufweitbare Wände (31) mittels Leitungen (29) mit Druckluft versorgt, die mit Ventilen ($29_1$) versehen sind, deren Öffnung vom Fahrzeugführer oder durch ein automatisches System gesteuert ist, und daß diese Leitungen wahlweise mit einem Druckminderer (32) zur Regulierung des Luftdrucks im Inneren der Wände versehen sein können.

5. Fahrzeug nach den Ansprüchen 1, 2 und 3, dadurch gekennzeichnet, daß der Speicher (1) aufweitbare Wände (31) mit Druckluft versorgt, die in ihrem unteren Bereich einen Längsspalt von mit einem Ventil ($29_1$) versehenen Leitungen (29) aufweisen, deren Ventilöffnung vom Fahrzeugführer oder durch ein automatisches System gesteuert ist, wobei der Spalt einen Luftvorhang mit sehr hohem Druck erzeugt, der die Auftriebsluft mit niedrigerem Druck einschließt und das Fahrzeug zum Schutz der Wände von Unebenheiten des Bodens anhebt.

6. Verfahren nach einem der vorhergehenden Ansprüche, dadurch gekennzeichnet, daß der Speicher (1) regelbare Auftriebsventile (60, 61) mit Druckluft versorgt, die am Umfang des Fahrzeugs und an der Grenze jedes Luftkissenabteils angeordnet sind, um einem Luftvorhang mit hohem Druck zu erzeugen, der die Auftriebsluft geringeren Drucks einschließt, und daß diese Ventile von zwei ebenen Wänden ($60_1$, $60_2$ ; $61_1$, $61_2$) gebildet sind, die unabhängig um parallele Achsen drehbeweglich und mit dem Speicher eine abgedichtete Verbindung aufweisen, derart, daß ihr Abstand und ihre Neigung veränderbar sind, um es auf diese Weise dem Fahrzeugführer oder einem automatischen System zu ermöglichen, die Öffnung, die Neigung und die Dicke des Luftvorhangs entsprechend der Verwendung des Fahrzeugs zu regulieren.

7. Fahrzeug nach einem der vorhergehenden Ansprüche, dadurch gekennzeichnet, daß der Motor und der Kompressor von einer im Inneren des Speichers untergebrachten Turbomaschine gebildet sind.

8. Fahrzeug nach einem der vorhergehenden Ansprüche, dadurch gekennzeichnet, daß die Turbomaschine über Triebräder Gebläse und/oder Turbinen antreibt, die den Speicher (1) mit Druckluft versorgen.

9. Fahrzeug nach einem der vorhergehenden Ansprüche, dadurch gekennzeichnet, daß die Verbrennungsgase der Turbomaschine durch eine Auslaßleitung außerhalb des Speichers und an der Rückseite des Fahrzeugs ausmünden und ein mit einem vom Fahrzeugführer oder von einem automatischen System betätigbaren Regulierventil (52) versehener Ringkanal zwischen der vertikalen Wand des Speichers und der Auslaßleitung der Turbomaschine angebracht ist, damit Druckluft des Speichers bei geöffnetem Ventil, die Gasauslaßleitung der Turbomaschine umgebend, ausströmen kann.

10. Fahrzeug nach den Ansprüchen 7, 8 und 9, dadurch gekennzeichnet, daß eine großdimensionierte Leitung (62) den Speicher (1) umgibt, die Turbomaschine einerseits Gebläse und/oder Turbinen, die die Leitung (62) mit Druckluft versorgen, und andererseits Gebläse und/oder Turbinen antreibt, die Luft in der Druckluftversorgungsleitung des Speichers (1) abnehmen, um einen Druckunterschied zwischen der Leitung (62) und dem Speicher (1) zur Erleichterung der Fahrzeugbewegungen zu erzielen, wobei die Leitung (62) die Auftriebsventile und der Speicher (1) die Richtungsventile versorgt.

Fig. 1

Fig. 2

Fig. 3

Fig. 4

Fig. 5

Fig. 6

Fig. 7

Fig. 8

2

Fig.9

Fig. 10